(19) Europäisches Patentamt
European Patent Office
Office européen des brevets

(11) Publication number: 0 194 110 B1

# (12) EUROPEAN PATENT SPECIFICATION

(45) Date of publication of the patent specification: 18.04.90

(51) Int. Cl.⁴: C08F 4/42

(21) Application number: 86301446.0

(22) Date of filing: 28.02.86

## (54) Polymer life enhancement in oxyanion-catalyzed polymerization.

(30) Priority: 01.03.85 US 707194

(43) Date of publication of application: 10.09.86 Bulletin 86/37

(45) Publication of the grant of the patent: 18.04.90 Bulletin 90/16

(84) Designated Contracting States: AT BE CH DE FR GB IT LI LU NL SE

(56) References cited:
EP-A- 0 068 887
US-A- 4 414 372

(73) Proprietor: E.I. DU PONT DE NEMOURS AND COMPANY, 1007 Market Street, Wilmington Delaware 19898(US)

(72) Inventor: Dicker, Ira Bernard, 1016 Jeffrey Road, Wilmington Delaware 19810(US)
Inventor: Hutchins, Clyde Spencer, 9586 Salem Terrace, Arlington Tennessee 38002(US)
Inventor: Spinelli, Harry Joseph, 4604 Big Rock Drive Rockwood Woods, Wilmington Delaware 19802(US)

(74) Representative: Jones, Alan John et al, CARPMAELS & RANSFORD 43 Bloomsbury Square, London, WC1A 2RA(GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



ACTORUM AG

**Description**

BACKGROUND

This invention relates to a process for polymerizing polar α-olefinic monomers to "living" polymers and to the "living" polymers produced by such a process.

The technology known as group transfer polymerization is described in U.S. Patents 4,417,034 - Webster and 4,414,372 - Farnham and Sogah, both granted in 1983 and European Patent Application No. 82303405.3. The former claims "living" polymers and their preparation from acrylic-type or maleimide monomers using defined organosilicon, -tin, or -germanium initiators and a catalyst which is a source of fluoride, cyanide or azide ions or a suitable Lewis acid. The latter is similar but uses as a co-catalyst a source of bifluoride ions. Both disclose various suitable solvents for the catalyst including acetonitrile used in amounts including 19 moles per mole of catalyst and more, and acetonitrile is used in larger quantities as a general solvent for the polymerization.

By "living" polymer is meant a polymer of the invention which contains at least one active terminal group and is capable of polymerizing further in the presence of monomer(s) and co-catalyst. The words "living" and "livingness" are used herein in quotation marks to distinguish from any biological connotations.

In attempts to use group transfer polymerization to better advantage, it would be desirable to find ways to increase or enhance the duration of the "livingness" of the polymerization. This would involve somehow decreasing the proportion of termination to further polymerization events. This could lead to higher molecular weight, lower polydispersity, and better control and predictability of molecular weight.

Related applications include Nos. 82 303 405.3, 84 302 261.7, 84 307,669.6, 85 201 447.1, and 85 308 668.4. Also, the European Application filed herewith corresponding to U.S. application Ser. No. 707 193, filed March 1, 1985, discloses and claims the use of certain types of oxyanion catalyst in group transfer polymerization.

SUMMARY OF THE INVENTION

The present invention provides a process of preparing a "living" polymer comprising contacting under polymerization conditions at least one polar monomer with (i) a polymerization initiator compound comprising a tetracoordinate metal selected from Si, Ge and Sn having at least one activating substituent or activating diradical attached thereto and optionally having one or more substituents that are inert under polymerizing conditions, (ii) a catalyst which is a salt comprising an oxyanion (including monooxyanion and/or bioxyanion) whose conjugate acid has a pKa (DMSO) of 5 to 24, and a suitable cation, and (iii) a polymerization life enhancement agent which moderates or retards the availability of said catalyst during polymerization so as to enhance the duration of "livingness" of the polymerization by increasing the proportion of polymerization events to termination events.

The enhancement agent is selected from the group consisting of acetonitrile and silylated acetonitriles containing 1–3 equivalents of $R_3Si$-groups, per mole of acetonitrile, wherein R is hydrocarbyl of up to 20 carbon atoms, optionally containing one or more ether oxygen atoms within aliphatic segments thereof, and optionally containing one or more functional substituents that are unreactive under polymerizing conditions.

The preferred concentration of the enhancement agent is in the range of 0.1-1000 moles per mole of catalyst, more preferably 1-200, sometimes optionally 5-25.

The preferred conjugate acid of the oxyanion catalyst has a pKa(DMSO) of 6-21, more preferably 8-18.

DETAILED DISCLOSURE

While the mechanism or mechanisms operating in enhancing the duration of "livingness" in group transfer polymerization by means of the present invention are not completely known or fully understood, and applicants' do not wish to be bound by any theory, it can be hypothesized that the enhancement agent in some way complexes, associates with, or otherwise lowers the availability of the catalyst, perhaps gradually releasing it to keep the polymerization alive longer. The fact that silylated acetonitrile has a similar effect is interesting, especially when the initiator itself is an organic silylated compound. Either acetonitrile itself of silylated aceto- nitrile can promote longevity in these polymerizations.

Possibly the effect is to lower the activity of the catalyst, thereby reducing the proportion of catalyst-activated "living" ends resulting in a shift towards and increased ratio of polymerization to termination rates.

In the process of the invention, the polymer produced is "living" in that the polymerization is characterized by the presence, in the growing and in the grown polymer, of a moiety containing the aforesaid metal at "living" ends and the activating substituent or diradical, or a tautomer thereof, at "nonliving" ends of the polymer.

Monomers which are useful herein are of the formula $CH_2=C(Y)X$ wherein:

X is -CN, -CH=CHC(O)X' or -C(O)X';
Y is -H, $-CH_3$, -CN or $-CO_2R$, provided, however, when X is -CH=CHC (O)X', Y is -H or $-CH_3$;
X' is $-OSi(R^1)_3$, -R, -OR or -NR'R";
each $R^1$, independently, is H or a hydrocarbyl radical which is an aliphatic, alicyclic, aromatic or mixed aliphatic-aromatic radical containing up to 20 carbon atoms, provided that at least one $R^1$ group is not H;
R is a hydrocarbyl radical which is an aliphatic, alicyclic, aromatic or mixed aliphatic-aromatic radical containing up to 20 carbon atoms, or a polymeric radical containing at least 20 carbon atoms, any of said radicals optionally containing one or more ether oxygen atoms within aliphatic segments thereof, optionally containing one or more functional substituents that are unreactive under polymerizing conditions, and optionally containing one or more reactive substituents of the formula $-Z'(O)C-C(Y^1)=CH_2$ wherein $Y^1$ is H or $CH_3$ and Z' is O or NR';
and
each of R' and R" is independently selected from
$C_{1-4}$ alkyl.

The initiator used in the polymerization of this invention is a silicon-containing initiator of U.S. Patents 4,414,372, 4,524,196, 4,417,034 and 4,508,880 supra, and copending applications Nos. 82303405.3, 84302261.7, 84307669.6, 85201447.1, and 85308668.4. Initiators which are preferred for use herein are of the formula selected from $(R^1)_3MZ$, $(R^1)_2M(Z^1)_2$ and $O[M(R^1)_2X^1]_2$ wherein:
$R^1$ is as defined above;
Z is an activating substituent selected from the group
consisting of

-CN, 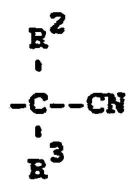 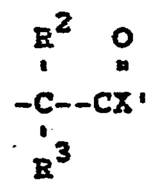

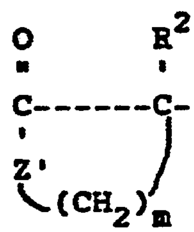 , 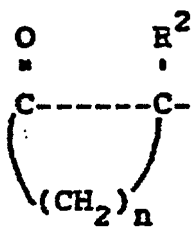

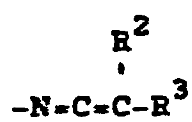 , 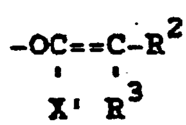 , 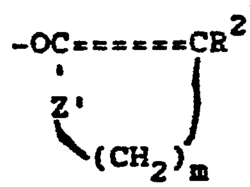 ,

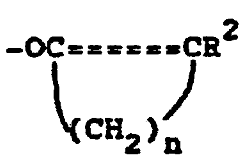 ,

-SR, $-OP(NR'R")_2$, $-OP(OR^1)_2$, $-OP[OSi(R^1)_3]_2$ and mixtures thereof wherein R, $R^1$, R', R", X' and Z' are as defined above;
$Z^1$ is the activating substituent

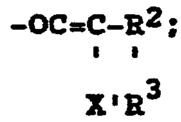

m is 2, 3 or 4;
n is 3, 4 or 5;
M is Si, Sn or Ge, provided, however, when Z is

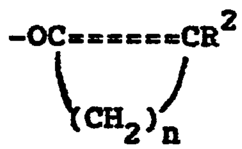 or 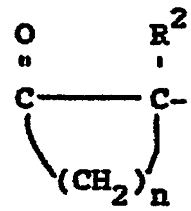 ,

M is Sn or Ge; and
each of $R^2$ and $R^3$ is independently selected from H and hydrocarbyl, defined as for R above;

(a) at least one of any R, $R^2$ and $R^3$ in the initiator optionally containing one or more initiating substituents of the formula $-Z^2-M(R^1)_3$ wherein
M and $R^1$ are as defined above;
$Z^2$ is an activating diradical selected from the group consisting of

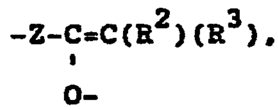 , 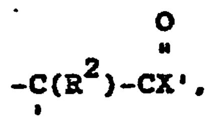 , 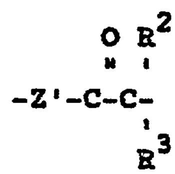 ,

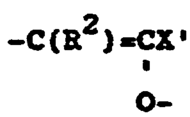 , 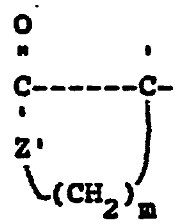 , 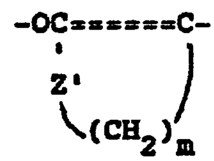 ,

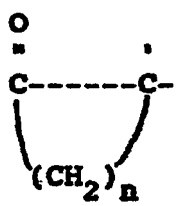 , 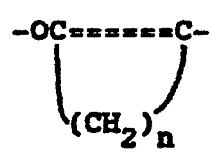 , 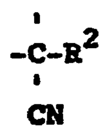 and mixtures

thereof, wherein $R^2$, $R^3$, X', Z', m and n are as defined above provided however when $Z^2$ is

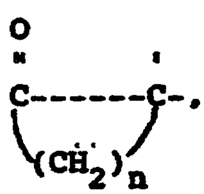

M is Sn or Ge.
(b) $R^2$ and $R^3$ taken together are

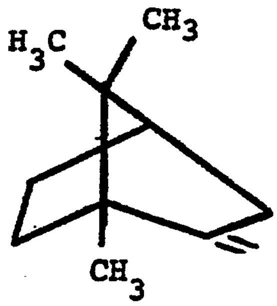

if Z is

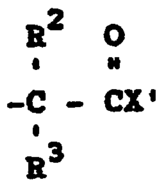

or

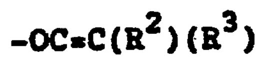

and/or $Z^2$ is

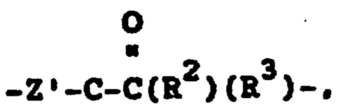

, and

(c) X' and either $R^2$ or $R^3$ taken together are

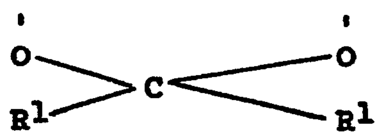

if Z is

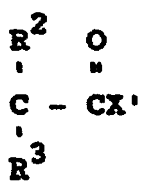

or

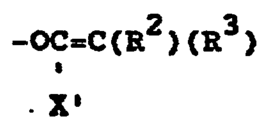

and/or

$Z^2$ is

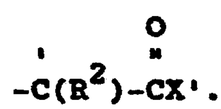

. --

By conjugate acid is meant the acid formed by protonating the catalytic oxyanion; for example, the conjugate acid of acetate anion is acetic acid, and the biacetate anion is acetic acid dimer.

By pKa(DMSO) of the conjugate acid is meant the negative logarithm of the acidity constant of the conjugate acid, measured in dimethylsulfoxide (DMSO) at 25°C. Methods for measuring pKa values of various acidic compounds, including oxyacids, are abundantly described in the literature, for example, by F. G. Bordwell et al., J. Org. Chem., 45, 3305 (1980); 46, 4327(1981); 47, 3224 (1982); and 49, 1424 (1984).

Preferably the silylated acetonitriles used in the invention are made by reacting acetonitrile with an organosilicon compound of the formula $R_3Si-X$ wherein X is an appropriate leaving group such as halogen. R can be hydrocarbyl of up to 20 carbon atoms, optionally containing one or more ether oxygen atoms within aliphatic segments thereof, and optionally containing one or more functional substituents that are unreactive under polymerizing conditions; preferably it is a C1-4 alkyl group, most preferably methyl.

In the following examples, the molecular weights of the polymer products ($\overline{M}_w$ and $\overline{M}_n$) were measured by gel permeation chromatography (GPC). The polydispersity of the polymer is defined by $\overline{D}=\overline{M}_w/\overline{M}_n$. Unless otherwise specified, any "living" polymer products which were obtained were quenched by exposure to moist air or methanol before molecular weights were determined. All temperatures are in degrees Celsuis. All parts, proportions and percentages are by weight except where indicated otherwise.

PROCEDURE FOR EXAMPLES 1-2 AND COMPARISONS 1-2

A reaction vessel at room temperature was charged with 90-93 g of glyme and approximately 1 g of [(1-methoxy-2-methyl-1-propenyl)oxy]trimethylsilane (MTS) initiator. Fifty μL of catalyst solution (1M) was then injected into the reactor. Additional glyme and catalyst (feed 1), and MMA (feed 2), were fed into the reactor over 80 min and 60 min periods, respectively, starting concurrently. Temperature, which was monitored at 5 min intervals, indicated exothermic reaction in all cases. After 90 min, 2 mL of methanol was added to quench "living" polymer. Product polymer, after conventional work-up, was analyzed by GPC to determine molecular weight. Conversion to polymer was calculated based on the solids content of the final polymerization mixture after quenching. Data and results are given in Table 1.

TABLE 1

| Ex. | Catalyst | Cat, µL | I, g | MMA, g | Glyme, g | % Solids | % Conv. | $\bar{M}_w$ | $\bar{M}_n$ | $\bar{M}_n$ (theor.) | D |
|---|---|---|---|---|---|---|---|---|---|---|---|
| 1 | a | 250 | 1.1 | 62.2 | 97.6 | 38.4 | 99.8 | 31,300 | 12,500 | 9,800 | 2.5 |
| 2 | a | 250 | 1.0 | 61.2 | 97.5 | 39.3 | 103.2 | 26,500 | 16,300 | 10,700 | 1.6 |
| (Comp 1) | b | 250 | 1.0 | 61.1 | 97.7 | (low) | (very low) | -- | -- | 10,700 | -- |
| (Comp 2) | c | 250 | 1.0 | 60.9 | 94.8 | 11.1 | 28.6 | 23,300 | 3,500 | 10,700 | 6.7 |

a) Tetrabutylammonium acetate, 1 M solution in acetonitrile (19 moles per mole of catalyst)

b) Tetrabutylammonium octanoate, 1 M in tetrahydrofuran

c) Tetrabutylammonium acetate, 1 M in tetrahydrofuran

I) Initiator (MTS)

MMA) methyl methacylate

D) Polydispersity = $\bar{M}_w/\bar{M}_n$

PROCEDURE FOR EXAMPLES 3-17 AND COMPARISONS 3 AND 4 -- METHYL METHACRYLATE CATALYZED BY VARIOUS TETRA(n-BUTYL)AMMONIUM OXYANION SALTS

To a 100 mL round-bottom flask containing a stirred solution of 30 mL of tetrahydrofuran and 0.20 mL (1.0 mmol) of [(1-methoxy-2-methyl-1- propenyl) oxy]trimethylsilane (MTS) was added various amounts of agent (see Table 1), followed by 0.02 mmol of tetrabutylammonium oxyanion catalyst (dissolved in a solvent in a concentration ranging from 0.28 to 0.55 molar). After 5 min, 5.0 mL (46.7 mmol) of methyl methacrylate was added dropwise at a rate of 1.0 mL/min. The reaction mixture exothermed. Exactly one h from the time at which the peak temperature was observed, a 0.5 mL sample of polymer solution (A) was withdrawn, after which 5.0 mL (46.7 mmol) of methyl methacrylate was added at a rate of 1.0 mL/min. A similar, but usually slightly lower, maximum temperature accompanied the resulting exotherm. One h. from the maximum exotherm temperature, a second 0.5 mL sample of polymer (B) was withdrawn and a third 5.0 mL (46.7 mmol) of methyl methacrylate was added at 1.0 mL/min. The third 0.5 mL sample of polymer (C) was withdrawn either one h from the peak exotherm temperature or 16 h later (the next morning). A fourth 5.0 mL (46.7 mmol) of methyl methacrylate was added (all at once) after the 16 h wait. If no exotherm followed this addition, an acetonitrile solution of 0.01 mmol of the oxyanion catalyst was added and the total polymer solution was quenched with methanol after an addition two h. The polymer was preoipitated from hexane, dried at 80°/20 mm and a final polymer sample (F) was taken. The four polymer samples were then analyzed by GPC.

Catalysts and agents employed and the results obtained are given in Table 2. The $\overline{M_n}$ shown in Table 2 are those observed, but for polymerization Step C the theoretical values are also shown. The theoretical number average molecular weights for Step A were all 4780 except for Ex. 13 which was 4700. For Step B they were 9420 except Ex. 3 at 9510, Exs. 12 and 13 at 9555 and Exs. 14-17 at 9600. For Step F they were 19,600 except for Exs. 3 and 7 at 19,300.

TABLE 2

| Ex. | Oxyanion of Catalyst | Solvent for Catalyst | Agent | Moles Agent per Mole of Catalyst | % Conversion A/B/C/F | $\bar{M}_n$(A)/D | $\bar{M}_n$(B)/D | $\bar{M}_n$(C)/D | $\bar{M}_n$(F)/D | $\bar{M}_n$(C) (theor.) |
|---|---|---|---|---|---|---|---|---|---|---|
| 3 | Benzoate | $CH_3CN$ | — | 68 | Q/Q/Q/L | 4580/ 1.38 | 10500/ 1.49 | 15200/ 1.81 | 18900/ 1.56 | 14140 |
| 4 | 0.7 Biacetate 0.3 Acetic acid | $CH_3CN$ | — | 64 | Q/Q/Q/L | 4860/ 1.32 | 9560/ 1.50 | 17200/ 1.54 | 18600/ 1.51 | 14230 |
| (Comp 3) | 0.7 Biacetate 0.3 Acetic Acid | Tetrahydrofuran (THF) | — | — | 54/L/- | 5300/ 1.74 | 8870/ 1.33 | — | — | — |
| (Comp 4) | Benzoate | Toluene | — | — | 97/L/- | 4740/ 1.40 | 4840/ 1.46 | — | — | — |
| 5 | Benzoate | Toluene | $CH_3CN$ | 48 | Q/Q/- | 4020/ 1.29 | 7800/ 1.60 | — | — | — |
| 6 | Benzoate | Toluene | $CH_3CN$ | 95 | Q/Q/Q/L | 4250/ 1.54 | 7350/ 1.65 | 12400/ 1.79 | 14510/ 1.68 | 14510 |
| 7 | Benzoate | Toluene | $CH_3CN$ | 6 | Q/Q/Q/L | 5830/ 1.07 | 12700/ 1.45 (3) | 29100/ 1.76 (2) | 20200/ 2.22 (2) | 14500 |
| 8 | Benzoate | Toluene | TMSAcN (3) | 0.6 | Q/Q/Q/L | 9700/ 1.04 | 18700/ 1.41 (1) | 16700/ 2.26 (2) | — | 14500 |
| 9 | Benzoate | Toluene | TMSAcN | 2 | Q/Q/Q/Q | 3830/ 1.05 | 7710/ 1.18 | 12300/ 1.32 | 17200/ 2.08 | 14500 |
| 10 | Benzoate | Toluene | TMSAcN | 6 | Q/Q/Q/L | 4130/ 1.07 | 7850/ 1.15 | 13200/ 1.21 | 13000/ 1.31 | 14500 |
| 11 | Benzoate | Toluene | TMSAcN | 7 | Q/Q/Q/L | 4700/ 1.09 | 9100/ 1.09 | 12800/ 1.30 | 13200/ 1.29 | 14500 |

TABLE 2 - Continued

| Ex. | Oxyanion of Catalyst | Solvent for Catalyst | Agent | Moles Agent per Mole of Catalyst | % Conversion A/B/C/F | $\overline{M}_n$(A)/D | $\overline{M}_n$(B)/D | $\overline{M}_n$(C)/D | $\overline{M}_n$(F)/D | $\overline{M}_n$(C) (theor.) |
|---|---|---|---|---|---|---|---|---|---|---|
| 12 | Benzoate | Toluene | TMSAcN | 11 | Q/Q/Q/L | 4410/ 1.05 | 8710/ 1.09 | 13300/ 1.17 | 13300/ 1.19 | 14400 |
| 13 | Benzoate | Toluene | TMSAcN | 34 | Q/Q/Q/Q | — | — | 11800/ 1.17 | 13400/ 1.38 | 14430 |
| 14 | 0.7 Biacetate 0.3 Acetic Acid | THF | TMSAcN | 6 | Q/Q/Q/Q | 4960/ 1.15 | 9770/ 1.16 | 17500/ 1.15 | 20500/ 1.44 | 14400 |
| 15 | Benzoate | Toluene | "Tris" ④ | 23 | Q/Q/Q/Q | 2470/ 1.20 | 4690/ 1.18 | 8470/ 1.20 | 10100/ 1.26 | 14400 |
| 16 | 0.7 Biacetate 0.3 Acetic acid | THF | "Tris" | 7 | Q/Q/- | 3930/ 1.11 | 7840/ 1.15 | — | — | — |
| 17 | Benzoate | Toluene | "Tris" | 2 | Q/Q/Q/- | — | 9080/ 1.16 | 14600/ 1.29 | | 14400 |

① bimodal $\overline{M}_w$ distribution
② trimodal $\overline{M}_w$ distribution
③ TMSAcN = α-trimethylsilylacetonitrile
④ "Tris" = tris-trimethylsilylacetonitrile

NOTES: "—" means no monomer added, therefore no data available
"L" denotes monomer added, but little if any yield
"Q" means essentially quantitative (100%) yield of polymer

The examples and comparative tests demonstrate improvements in terms of increased molecular weight and lower polydispersity from use of the invention, particularly acetonitrile and silylated acetonitrile used as polymerization life enhancers.

These processes can be used to produce superior polymers by group transfer polymerization for the uses disclosed in the patents and applications incorporated herein by reference.

**Claims**

1. Process of preparing a "living" polymer comprising contacting under polymerization conditions at least one polar acrylic-type alpha olefinic monomer with (i) a tetracoordinate organosilicon, organotin, or organogermanium polymerization initiator having at least one initiating site, (ii) a catalyst which is a salt comprising an oxyanion whose conjugate acid has a pKa (DMSO) of 5 to 24, and a suitable cation, characterized by also contacting with (iii) a polymerization life enhancement agent which is selected from the group consisting of acetonitrile and silylated acetonitriles containing 1–3 equivalents of $R_3Si$ group per mole of acetonitrile, wherein R is hydrocarbyl of up to 20 carbon atoms, optionally containing one or more ether oxygen atoms within aliphatic segments thereof and optionally containing one or more functional substituents that are unreactive under polymerizing conditions.

2. A process of preparing a "living" polymer comprising contacting under polymerization conditions at least one pollar acrylic-type alpha olefinic monomer with (i) a tetracoordinate organosilicon, organotin, or organogermanium polymerization initiator having attached thereto at least one activating substituent or activating diradical, said activating substituent being selected from:

$-CN$, 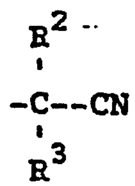 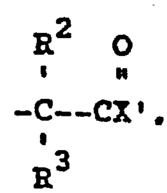,

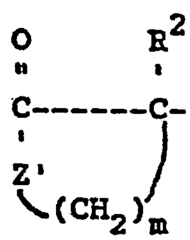, 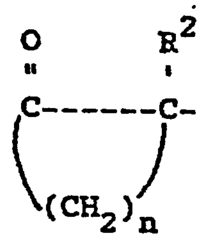

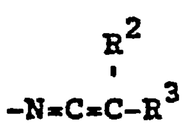, 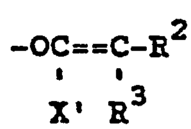, 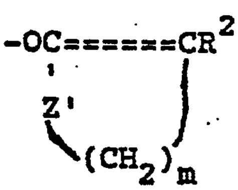,

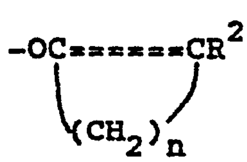,

$-SR$, $-OP(NR'R'')_2$, $-OP(OR^1)_2$, $-OP[OSi(R^1)_3]_2$ and mixtures thereof, wherein

X′ is $-OSi(R^1)_3$, $-R$, $-OR$ or $-NR'R''$;

each $R^1$, independently, is H or a hydrocarbyl radical which is an aliphatic, alicyclic, aromatic or mixed aliphatic-aromatic radical containing up to 20 carbon atoms, provided that at least one $R^1$ group is not H;

R is a hydrocarbyl radical which is an aliphatic, alicyclic, aromatic or mixed aliphatic-aromatic radical containing up to 20 carbon atoms, or a polymeric radical containing at least 20 carbon atoms, any of said radicals optionally containing one or more ether oxygen atoms within aliphatic segments thereof, optionally containing one or more functional substituents that are unreactive under polymerizing conditions, and optionally containing one or more reactive substituents of the formula $-Z'(O)C-C(Y^1)=CH_2$ wherein $Y^1$ is H or $CH_3$ and Z′ is O or NR′; and
each of R′ and R″ is independently selected from $C_{1-4}$ alkyl,
$Z^1$ is the activating substituent

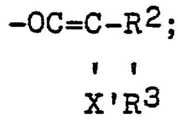

m is 2, 3 or 4;
n is 3, 4 or 5;
M is Si, Sn or Ge, provided, however, when Z is

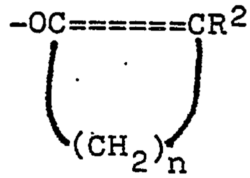

or

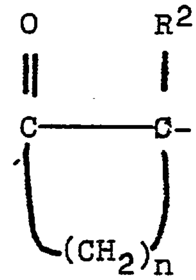

M is Sn or Ge; and
each of $R^2$ and $R^3$ is independently selected from H and hydrocarbyl, defined as for R above,
at least one of any R, $R^2$ and $R^3$ groups in the initiator optionally containing one or more initiating substituents of the formula $-Z^2-M(R^1)_3$ wherein
M and $R^1$ are as defined above;
and said activating diradical being selected from

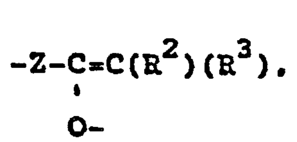,

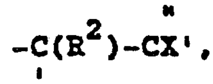,

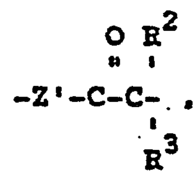,

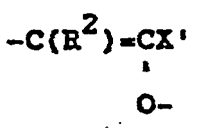,

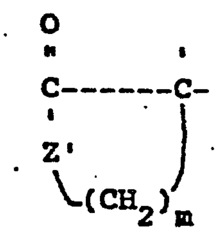,

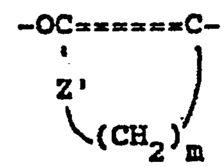,

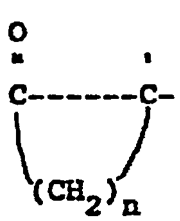,

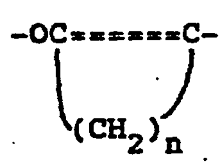,

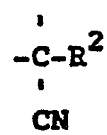 and mixtures

thereof[2] wherein $R^2$, $R^3$, X′, Z′, m and n are as defined above provided that
(a) when $Z^2$ is

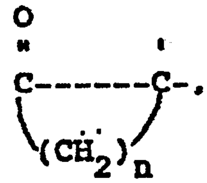

M is Sn or Ge,

(b) $R^2$ and $R^3$ taken together are

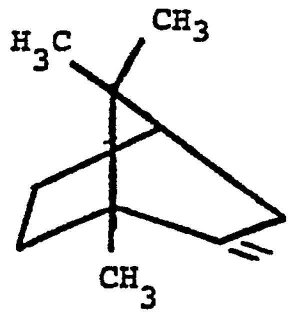

if Z is

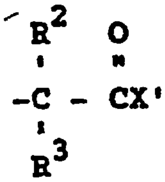 or $-OC=C(R^2)(R^3)$ and/or $Z^2$ is

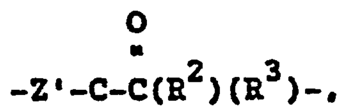, and

(c) X′ and either $R^2$ or $R^3$ taken together are

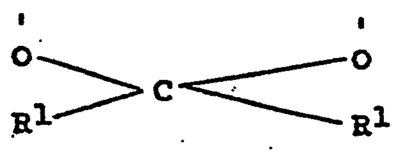

if Z is

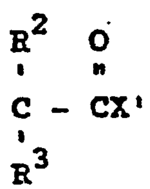 or 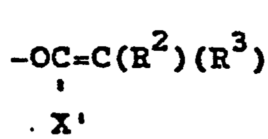 and/or

$Z^2$ is 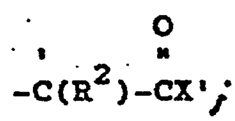;

said polymerisation initiator optionally having one or more substituents that are inert under polymerizing conditions, (ii) a catalyst which is a salt comprising a monoxyanion or bioxyanion whose conjugate acid has a pKa(DMSO) of 5 to 24, and a suitable cation, characterized by also contacting with (iii) a polymerization life enhancement agent which is selected from the group consisting of acetonitrile and silylated acetonitriles containing 1–3 equivalents of $R_3Si$ group per mole of acetonitrile, wherein R is hydrocarbyl of up to 20 carbon atoms, optionally containing one or more ether oxygen atoms within

aliphatic segments thereof and optionally containing one or more functional substituents that are unreactive under polymerizing conditions.

3. The process of claim 1 or 2 wherein the enhancement agent concentration is in the range of 0.1-1000 moles per mole of catalyst.

4. The process of claim 3 wherein the enhancement agent concentration is in the range of 1-200 moles per mole of catalyst.

5. The process of claim 4 wherein the enhancement agent concentration is in the range of 5-25 moles per mole of catalyst.

6. The process of any one of claims 1 to 5 wherein the enhancement agent is acetonitrile.

7. The process of any one of claims 1 to 5 wherein the enhancement agent is silylated acetonitrile.

8. The process of any one of claims 1 to 7 wherein said conjugate acid has a pKa(DMSO) of 6-21.

9. The process of claim 8 wherein said conjugate acid has a pKa(DMSO) of 8-18.

10. The process of any one of claims 2 to 5 wherein, the silylated acetonitrile contains 1 equivalent of $R_3Si$-groups per mole of acetonitrile, and R is selected from $C_{1-4}$ alkyl groups.

11. The process of any one of claims 2 to 5 wherein, the silylated acetonitrile contains 3 equivalents of $R_3Si$-groups per mole of acetonitrile, and R is selected from $C_{1-4}$ alkyl groups.

12. The process of claim 10 or Claim 11 wherein R is a methyl group.

**Patentansprüche**

1. Verfahren zur Herstellung eines "lebenden" Polymers, welches das Inberührungbringen, unter Polymerisationsbedingungen, von wenigstens einem polaren α-olefinischen Monomer vom Acryltyp mit (i) einem tetrakoordinierten Organosilizium-, Organozinn- oder Organogermanium-Polymerisationsinitiator mit wenigstens einer Initiierungsstelle, (ii) einem Katalysator, der ein ein Oxyanion, dessen konjugierte Säure einen pKa (DMSO) von 5 bis 24 hat, und ein geeignetes Kation umfassendes Salz ist, umfasst, dadurch gekennzeichnet, dass es auch mit (iii) einem Mittel zur Verlängerung der Polymerisations-Lebensdauer in Berührung gebracht wird, welches aus der aus Acetonitril und silylierten Acetonitrilen mit 1 bis 3 Äquivalenten einer $R_3Si$-Gruppe pro Mol Acetonitril bestehenden Gruppe ausgewählt ist, worin R ein Kohlenwasserstoffrest mit bis zu 20 Kohlenstoffatomen ist, der gegebenenfalls ein oder mehrere Ether-Sauerstoffatome innerhalb seiner aliphatischen Segmente und gegebenenfalls einen oder mehrere funktionelle Substituenten, die unter Polymerisationsbedingungen unreaktiv sind, enthält.

2. Verfahren zur Herstellung eines "lebenden" Polymers, welches das Inberührungbringen, unter Polymerisationsbedingungen, von wenigstens einem polaren α-olefinischen Monomer vom Acryltyp mit (i) einem tetrakoordinierten Organosilizium-, Organozinn- oder Organogermanium-, Polymerisationsinitiator mit wenigstens einem daran gebundenen aktivierenden Substituenten oder aktivierenden Diradikal, wobei der aktivierende Substituent aus

-CN, 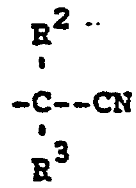 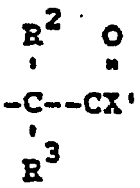,

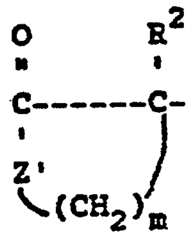, 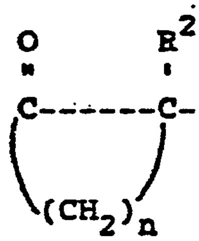

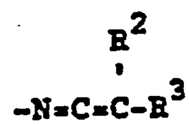, 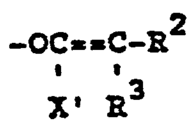, 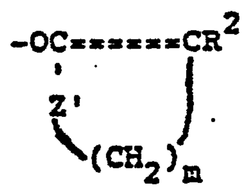,

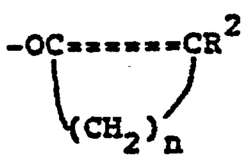.

-SR, $-OP(NR'R'')_2$, $-OP(OR^1)_2$, $-OP[OSi(R^1)_3]_2$ und Mischungen davon ausgewählt wird, worin X, $-OSI(R^1)_3$, -R-, -OR oder NR′R″ ist;
jedes $R^1$ unabhängig H oder ein Kohlenwasserstoffrest ist, der ein aliphatischer, alicyclischer, aromatischer oder gemischter aliphatisch-aromatischer Rest mit bis zu 20 Kohlenstoffatomen ist, mit der Massgabe, dass wenigstens $R^1$-Gruppe nicht H ist;
R ein Kohlenwasserstoffrest, der ein aliphatischer, alicyclischer, aromatischer oder gemischtaliphatisch-aromatischer Rest mit bis zu 20 Kohlenstoffatomen ist, oder ein polymerer Rest mit wenigstens 20 Kohlenstoffatomen ist, wobei jeder dieser Reste ein oder mehrere Ethersauerstoffatome innerhalb seiner aliphatischer Segmente enthält, gegebenenfalls einen oder mehrere funktionelle Substituenten, die unter Polymerisationsbedingungen unreaktiv sind, enthält und gegebenenfalls einen oder mehrere reaktive Substituenten der Formel $-Z'(O(CC(Y^1)=CH_2$ enthält, worin $Y^1$ H oder $CH_3$ ist und Z′O oder NR′ ist; und ist und Z′, O oder NR′ ist; und R′ und R″ jeweils unabhängig aus $C_{1-4}$-Alkyl ausgewählt sind,
$Z^1$ der aktivierende Substituent

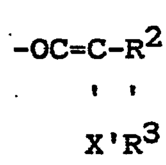 ist;

m 2, 3 oder 4 ist;
n 3, 4 oder 5 ist;
M Si, Sn oder Ge ist, jedoch mit der Massgabe, dass, wenn Z

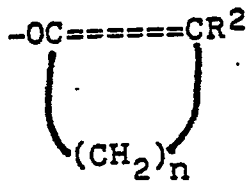 oder 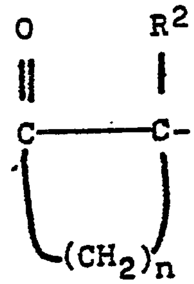 ist,

M Sn oder Ge ist; und
$R^2$ und $R^3$ jeweils unabhängig aus H und Kohlenwasserstoff, wie oben für R definiert, ausgewählt sind;
worin wenigstens eine der jeweiligen Gruppen R, $R^2$ und $R^3$ in Initiator gegebenenfalls einen oder mehrere initiierende Substituenten der Formel $-Z^2M(R^1)_3$ enthält,
worin M und $R^1$ wie oben definiert sind;
und wobei das aktivierende Diradikal aus

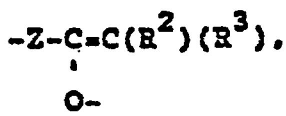, 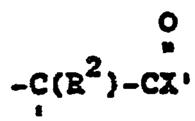, 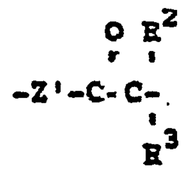,

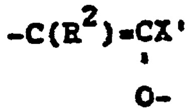, 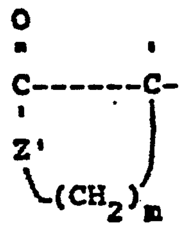, 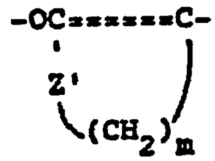,

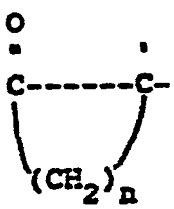, 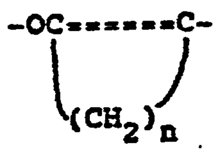, 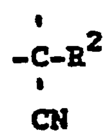

und Mischungen davon ausgewählt wird,
worin $R^2$, $R^3$, X', Z', m und n wie oben definiert sind,
mit der Massgabe, dass
(a) wenn $Z^2$

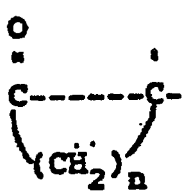,

ist, M Sn oder Ge ist,
(b) $R^2$ und $R^3$ zusammen genommen

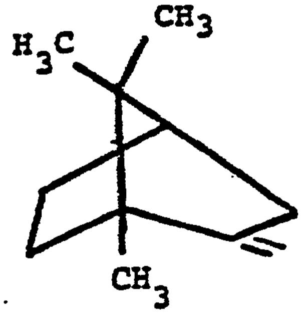

sind, falls Z 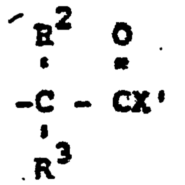 oder $-OC=C(R^2)(R^3)$ ist

und/oder $Z^2$ 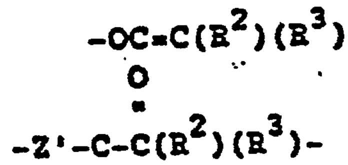 ist, und

(c) X' und entweder $R^2$ oder $R^3$ zusammen genommen

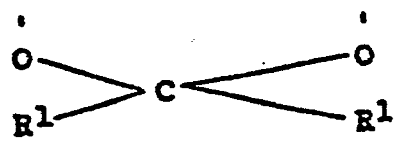

sind, falls Z 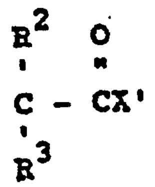 oder 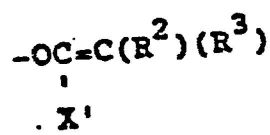

ist und/oder $Z^2$ 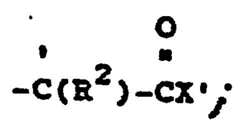 ist;

wobei der Polymerisationsinitiator gegebenenfalls einen oder mehrere Substituenten aufweist, die unter Polymerisationsbedingungen inert sind, (ii) einem Katalysator, der ein ein Monooxyanion oder Bioxyanion, dessen konjugierte Säure einen pKa (DMSO) von 5 bis 24 hat, und ein ein geeignetes Kation umfassendes Salz ist, umfasst, dadurch gekennzeichnet, dass es auch mit (iii) einem Mittel zur Verlängerung der Polymerisations-Lebensdauer in Berührung gebracht wird, das aus der aus Acetonitril und silyliertem Acetonitril mit 1 bis 3 Äquivalenten einer $R_3Si$-Gruppe pro Mol Acetonitril bestehenden Gruppe ausgewählt wird, worin R ein Kohlenwasserstoffrest mit bis zu 20 Kohlenstoffatomen ist, der gegebenenfalls ein oder mehrere Sauerstoffatome innerhalb seiner aliphatischen Segmente und gegebenenfalls einen oder mehrere funktionelle Substituenten, die unter Polymerisationsbedingungen unreaktiv sind, enthält.

3. Verfahren nach Anspruch 1 oder 2, worin die Konzentration des Verlängerungsmittels im Bereich von 0,1 bis 1000 Mol pro Mol Katalysator liegt.

4. Verfahren nach Anspruch 3, worin die Konzentration des Verlängerungsmittels im Bereich von 1 bis 200 Mol pro Mol Katalysator liegt.

5. Verfahren nach Anspruch 4, worin die Konzentration des Verlängerungsmittels im Bereich von 5 bis 25 Mol pro Mol Katalysator liegt.

6. Verfahren nach einem der Ansprüche 1 bis 5, worin das Verlängerungsmittel Acetonitril ist.

7. Verfahren nach einem der Ansprüche 1 bis 5, worin das Verlängerungsmittel silyliertes Acetonitril ist.

8. Verfahren nach einem der Ansprüche 1 bis 7, worin die konjugierte Säure einen pKa (DMSO) von 6 bis 21 hat.

9. Verfahren nach Anspruch 8, worin die konjugierte Säure einen pKa (DMSO) von 8 bis 18 hat.

10. Verfahren nach einem der Ansprüche 2 bis 5, worin das silylierte Acetonitril ein Äquivalent $R_3Si$-Gruppen pro Mol Acetonitril enthält und R aus $C_{1-4}$-Alkylgruppen ausgewählt wird.

11. Verfahren nach einem der Ansprüche 2 bis 5, worin das silylierte Acetonitril 3 Äquivalente $R_3Si$-Gruppen pro Mol Acetonitril enthält und R aus $C_{1-4}$-Alkylgruppen ausgewählt wird.

12. Verfahren nach Anspruch 10 oder Anspruch 11, worin R eine Methylgruppe ist.

**Revendications**

1. Procédé de préparation d'un polymère "vivant", comprenant la mise en contact, dans des conditions de polymérisation, d'au moins un monomère alpha-oléfinique polaire de type acrylique avec (i) un initiateur de polymérisation qui est un composé organique de silicium, d'étain ou de germanium tétracoordonné, comportant au moins un site d'initiation, (ii) un catalyseur qui est un sel comprenant un oxanion dont l'acide conjugué a un pka (DMSO) de 5 à 24, et un cation approprié, caractérisé par une mise en contact également avec (iii) un agent d'augmentation de la vie de polymérisation qui est choisi dans le groupe formé par l'acétonitrile et les acétonitriles silylés contenant 1 à 3 équivalents de groupes $R_3Si$ par mole d'acétonitrile, où R est un groupe hydrocarbyle d'au plus 20 atomes de carbone, contenant facultativement un ou plusieurs atomes d'oxygène d'éther au sein de ses segments aliphatiques et contenant facultativement un ou plusieurs substituants fonctionnels qui ne sont pas réactifs dans les conditions de polymérisation.

2. Un procédé de préparation d'un polymère "vivant", comprenant la mise en contact, dans des conditions de polymérisation, d'au moins un monomère alpha-oléfinique polaire de type acrylique avec (i) un initiateur de polymérisation qui est un composé organique de silicium, d'étain ou de germanium tétracoordonné, auquel est fixé au moins un substituant activateur ou un biradical activateur, ledit substituant activateur étant choisi parmi:

-CN,

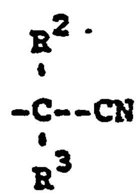

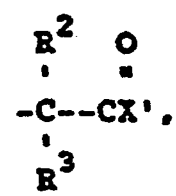

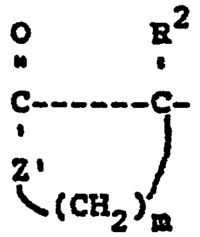, 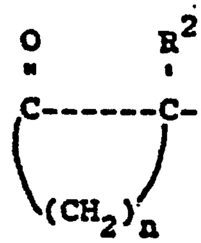

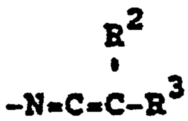, 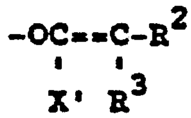, 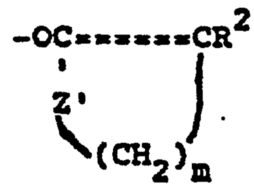,

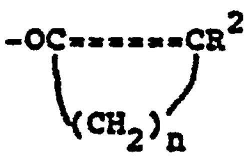.

–SR, –OP(NR′R″)$_2$, –OP(OR$^1$)$_2$, –OP[OSi(R$^1$)$_3$]$_2$ et leurs mélanges, ou X′ est –OSi(R$^1$)$_3$, –R, –OR ou –NR′R″;

chaque R$^1$ est, indépendamment, H ou un radical hydrocarbyle qui est un radical aliphatique, alicyclique, aromatique ou aliphatique-aromatique mixte contenant au plus 20 atomes de carbone, à condition qu'au moins un groupe R$^1$ ne soit pas H;

R est un radical hydrocarbyle qui est un radical aliphatique, alicyclique, aromatique ou aliphatique-aromatique mixte contenant au plus 20 atomes de carbone, ou un radical polymère contenant au moins 20 atomes de carbone, n'importe lesquels desdits radicaux contenant facultativement un ou plusieurs atomes d'oxygène d'éther au sein de leurs segments aliphatiques, contenant facultativement un ou plusieurs substituants fonctionnels qui ne sont pas réactifs dans les conditions de polymérisation, et contenant facultativement un ou plusieurs substituants réactifs de la formule –Z′(O)C–C(Y$^1$)=CH$_2$ ou Y$^1$ est H ou CH$_3$ et Z′ est O ou NR′; et

chacun de R′ et R″ est indépendamment choisi parmi les groupes alkyles en C$_1$–C$_4$;

Z$^1$ est le substituant activateur

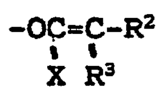 ;

m est 2, 3 oú 4;

n est 3, 4 ou 5;

M est Si, Sn ou Ge, avec la condition, cependant, que si Z est

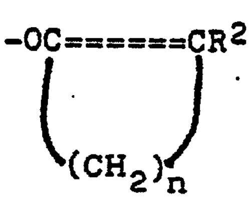 or 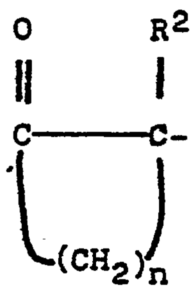

M soit Sn ou Ge; et

chacun de R$^2$ et R$^3$ est indépendamment choisi parmi H et les radicaux hydrocarbyles tels que définis pour R ci-dessus, l'un au moins de n'importe quels groupes R, R$^2$ et R$^3$ dans l'initiateur contenant facultativement un ou plusieurs substituants d'initiation de la formule $-Z^2-M(R^1)_3$ où M et $R^1$ sont comme définis ci-dessus; et ledit biradical activateur étant choisi parmi:

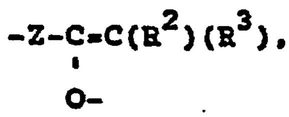,
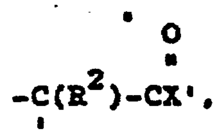,
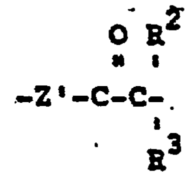.

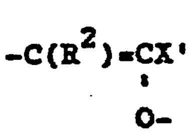,
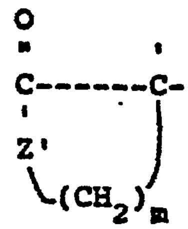,
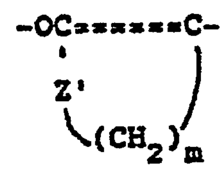.

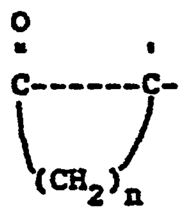,
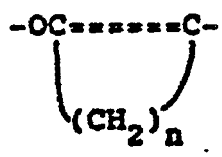,
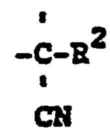 and mixtures

et leurs mélanges, où $R^2$, $R^3$, X', Z', m et n sont comme définis ci-dessus avec les conditions suivantes

(a) si $Z^2$ est

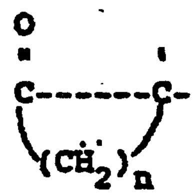,

M est Sn ou Ge,

(b) $R^2$ et $R^3$, pris ensemble sont

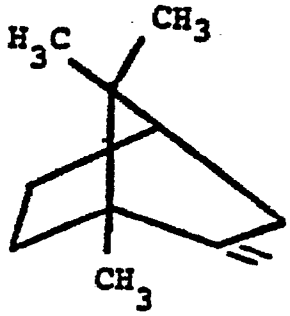

si Z est

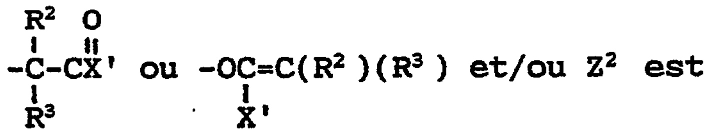

ou

et/ou $Z^2$ est

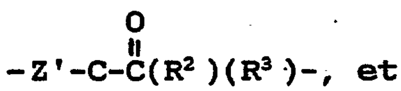

et

(c) X′ et l'un ou l'autre de $R^2$ et $R^3$, pris ensemble, sont

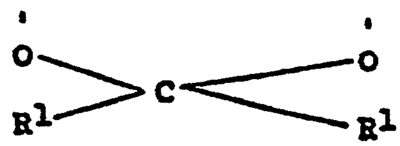

si Z est

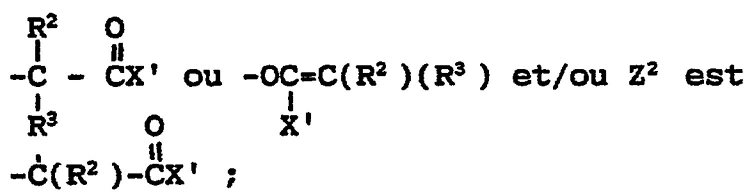

ou

et/ou $Z^2$ est

;

ledit initiateur de polymérisation comportant facultativement un ou plusieurs substituants qui sont inertes dans les conditions de polymérisation, (ii) un catalyseur comprenant un monooxanion ou bioxanion dont l'acide conjugué a un pKa (DMSO) de 5 à 24, et un cation approprié, caractérisé par la mise en contact également avec (iii) un agent d'augmentation de la vie de polymérisation qui est choisi dans le groupe formé par l'acétonitrile et les acétonitriles silylés contenant 1 à 3 équivalents de groupes $R_3Si$ par mole d'acétonitrile, où R est un groupe hydrocarbyle d'au plus 20 atomes de carbone, contenant facultativement un ou plusieurs atomes d'oxygène d'éther au sein de ses segments aliphatiques et contenant facultativement un ou plusieurs substituants fonctionnels qui ne sont pas réactifs dans les conditions de polymérisation.

3. Le procédé de la revendication 1 ou 2, dans lequel la concentration d'agent d'augmentation se situe dans l'intervalle de 0,1 à 1000 moles par mole de catalyseur.

4. Le procédé de la revendication 3, dans lequel la concentration d'agent d'augmentation se situe dans l'intervalle de 1 à 200 moles par mole de catalyseur.

5. Le procédé de la revendication 4, dans lequel la concentration d'agent d'augmentation se situe dans l'intervalle de 5 à 25 moles par mole de catalyseur.

6. Le procédé de l'une quelconque des revendications 1 à 5, dans lequel l'agent d'augmentation est l'acétonitrile.

7. Le procédé de l'une quelconque des revendications 1 à 5, dans lequel l'agent d'augmentation est de l'acétonitrile silylé.

8. Le procédé de l'une quelconque des revendications 1 à 7, dans lequel ledit acide conjugué a un pKa (DMSO) de 6 à 21.

9. Le procédé de la revendication 8, dans lequel ledit acide conjugué a un pKa (DMSO) de 8 à 18.

10. Le procédé de l'une quelconque des revendications 2 à 5, dans lequel l'acétonitrile silylé contient 1 équivalent de groupes $R_3Si$ par mole d'acétonitrile, et R est choisi parmi les groupes alkyles en $C_1$–$C_4$.

11. Le procédé de l'une quelconque des revendications 2 à 5, dans lequel l'acétonitrile silylé contient 3 équivalents de groupes $R_3Si$ par mole d'acétonitrile, et R est choisi parmi les groupes alkyles en $C_1$–$C_4$.

12. Le procédé de la revendication 10 ou de la revendication 11, dans lequel R est un groupe méthyle.